# FASCICULE DE BREVET EUROPEEN

(11) **EP 2 766 206 B1**
(45) Date de publication et mention de la délivrance du brevet: **24.02.2016**
(21) Numéro de dépôt: 12780133.0
(22) Date de dépôt: 11.10.2012
(51) Int. Cl.: B60H 1/32, B60H 1/00, F25B 41/06

(54) **DISPOSITIF DE DETENTE COMPRENANT UN MOYEN DE DETENTE ET UN MOYEN DE CONTOURNEMENT DU MOYEN DE DETENTE**
DRUCKENTLASTUNGSVORRICHTUNG MIT EINEM DRUCKENTLASTUNGSMITTEL UND MITTEL ZUR UMGEHUNG DES DRUCKENTLASTUNGSMITTELS
DEPRESSURIZATION DEVICE INCLUDING A DEPRESSURIZATION MEANS AND A MEANS FOR BYPASSING THE DEPRESSURIZATION MEANS

(30) Priorité: 13.10.2011 FR 1103121
(43) Date de publication de la demande: 20.08.2014
(73) Titulaire: Valeo Systemes Thermiques, 78320 Le Mesnil-Saint-Denis Cedex (FR)
(72) Inventeur: YAHIA, Mohamed, 75005 Paris (FR); HALLER, Régine, 87490 Boissy Sans Avoir (FR)
(74) Mandataire: Pellegrini, Marie Claude
(86) Numéro de dépôt international: PCT/EP2012/070175
(87) Numéro de publication internationale: WO 2013/053835

(56) Documents cités:
- EP-A1- 0 718 133
- EP-A1- 1 134 467
- EP-A2- 1 715 263
- FR-A1- 2 841 829

## Description

Le secteur technique de la présente invention est celui des ensembles ou systèmes utilisés pour conditionner un flux d'air entrant dans un habitacle de véhicule automobile. Plus particulièrement, l'invention vise un dispositif de détente qui permet d'optimiser le cycle thermodynamique qui prend place dans un circuit de fluide réfrigérant quand celui-ci est utilisé au moins en un mode de déshumidification du flux d'air envoyé dans l'habitacle. L'invention couvre également l'utilisation de ce circuit en au moins un mode de chauffage et un mode de refroidissement de l'habitacle.

A titre d'exemple, le document EP 1 134 467 divulgue un dispositif de détente pour circuit de fluide réfrigérant installé sur un véhicule comprenant un corps propre à être traversé par un fluide réfrigérant.

Un véhicule automobile est classiquement équipé d'une boucle ou circuit de climatisation à l'intérieur duquel circule un fluide frigorigène. Cette boucle comprend classiquement un compresseur, un condenseur, un détendeur et un évaporateur parcourus dans cet ordre par le fluide frigorigène. L'évaporateur est monté à l'intérieur d'une installation de ventilation, chauffage et/ou climatisation généralement placée dans l'habitacle du véhicule pour fournir à ce dernier un flux d'air chaud ou un flux d'air froid, en fonction d'une demande de l'utilisateur du véhicule. Le condenseur est quant à lui classiquement installé en face avant du véhicule pour être traversé par le flux d'air extérieur au véhicule.

Cette boucle de climatisation peut être utilisée en mode de refroidissement ou en mode de chauffage. En mode de refroidissement, le fluide réfrigérant est envoyé vers l'échangeur de face avant fonctionnant en mode condenseur, où le fluide réfrigérant est refroidi par le flux d'air extérieur. Puis, le fluide réfrigérant circule vers un premier détendeur où il subit un abaissement de sa pression avant d'entrer dans l'échangeur habitacle, ce dernier fonctionnant en mode évaporateur. Le fluide réfrigérant traversant l'évaporateur est alors chauffé par le flux d'air entrant dans l'installation de ventilation, ce qui se traduit corrélativement par un refroidissement de ce flux d'air dans le but de climatiser l'habitacle du véhicule. Le le circuit étant une boucle fermée, le fluide réfrigérant retourne alors vers le compresseur.

En mode chauffage, le fluide est mis en circulation par le compresseur qui l'envoie vers l'échangeur habitacle, ce dernier fonctionnant alors en mode condenseur. Le fluide réfrigérant est alors refroidi par l'air circulant dans l'installation de ventilation. Cet air se chauffe donc au contact de l'échangeur habitacle et apporte ainsi des calories à l'habitacle du véhicule. Après passage dans l'échangeur habitacle, le fluide réfrigérant est détendu par un deuxième détendeur avant d'arriver dans l'échangeur de face avant, ce dernier étant utilisé en mode évaporateur. Le flux d'air extérieur chauffe alors le fluide réfrigérant. Le flux d'air extérieur est par conséquent plus froid après son passage dans l'échangeur de face avant comparé à sa température avant son passage au travers de l'échangeur habitacle. Le fluide réfrigérant retourne alors vers le compresseur.

Une telle organisation a été améliorée en complétant la boucle de climatisation présentée ci-dessus par l'ajout d'un échangeur supplémentaire traversé par le fluide réfrigérant et dont la fonction est de chauffer l'air envoyé dans l'habitacle. Ainsi, cet échangeur dit « intérieur » se comporte comme un radiateur à la place de l'évaporateur, en mode de chauffage.

Il est des situations où il est nécessaire non seulement d'assurer le chauffage du flux d'air envoyé dans l'habitacle, mais également d'assécher ce dernier afin d'éviter qu'une buée se forme sur les vitres du véhicule et gène la vision du conducteur. Une telle fonction est appelée mode de déshumidification.

Ce mode de déshumidification est assuré en chauffant le flux d'air envoyé dans l'habitacle au moyen de l'échangeur intérieur, tout en refroidissant préalablement ce même flux d'air par passage au travers de l'évaporateur.

Sous certaines conditions météorologiques, par exemple une température de l'air extérieur au véhicule de 7°C et un taux d'humidité dans l'air extérieur avoisinant les 95% (conditions de pluie), ce mode de déshumidification est déficient en ce sens qu'il entraîne une consommation d'énergie très importante de la part du compresseur. Il s'agit ici d'un premier inconvénient que l'invention se propose de résoudre.

Ces conditions entraînent un deuxième inconvénient. La présence du premier détendeur en série avec le deuxième détendeur forme un ensemble qui freine la circulation du fluide réfrigérant. Autrement dit, la performance du cycle thermodynamique dans cette situation est dégradée par le faible débit de fluide réfrigérant qui circule dans le circuit, ce faible débit étant la conséquence de la présence en série de deux dispositifs qui abaissent successivement la pression du fluide réfrigérant.

Le but de la présente invention est donc de résoudre les inconvénients décrits ci-dessus principalement en proposant un composant capable, d'une part d'assurer un abaissement de la pression du fluide réfrigérant quand le circuit est opéré en mode de refroidissement, et d'autre part d'être transparent, autrement dit inactif sur le cycle thermodynamique, quand le circuit est opéré, par exemple, en mode de déshumidification du flux d'air envoyé dans l'habitacle du véhicule.

L'invention a donc pour objet un dispositif de détente pour circuit de fluide réfrigérant installé sur un véhicule, comprenant un corps propre à être traversé par un fluide réfrigérant, ledit corps logeant un moyen de détente propre à abaisser la pression du fluide réfrigérant et un moyen de contournement du moyen de détente apte à s'ouvrir quand une pression du fluide réfrigérant en amont du moyen de contournement est inférieure à un seuil déterminé. On comprend ici que le moyen de contournement est exposé au fluide réfrigérant qui alimente le moyen de détente. Le moyen de contournement comprend ainsi un élément susceptible de libérer le passage au travers d'un canal constitutif du moyen de contournement quand la pression en amont de cet élément passe en dessous du seuil déterminé.

Selon une première caractéristique de l'invention, le moyen de contournement est fermé quand la pression du fluide réfrigérant en amont du moyen de contournement est supérieure audit seuil.

Selon une deuxième caractéristique de l'invention, le moyen de contournement génère une perte de charge maximum de 1 bar +/-0.5 bars. On garantit ainsi que le dispositif de détente est transparent du point de vue du cycle thermodynamique lorsque le moyen de contournement est ouvert.

Selon une autre caractéristique de l'invention, le moyen de contournement comprend un canal dont la circulation du fluide réfrigérant est placée sous la dépendance d'un élément d'obturation, ledit élément d'obturation étant, d'une part exposé à la pression du fluide réfrigérant en amont dudit élément d'obturation, et d'autre part, soumis à un effort mécanique. On comprend ici que l'effort mécanique n'est pas lié directement ou indirectement à la pression du fluide réfrigérant.

Selon encore une caractéristique de l'invention, le dispositif de détente comprend un moyen ressort qui exerce l'effort mécanique selon un sens opposé à un sens d'une force générée sur l'élément d'obturation par la pression du fluide réfrigérant en amont de l'élément d'obturation. Une telle structure est simple à concevoir puisque l'élément d'obturation peut facilement coulisser dans un fût, en fonction de la résultante des forces générées par le moyen ressort et par la pression du fluide réfrigérant.

Selon encore une autre caractéristique de l'invention, le canal présente une section au minimum égale à 9 mm². On s'assure ainsi que le débit de fluide réfrigérant dans le circuit n'est pas limité par le moyen de contournement quand celui-ci est ouvert.

Avantageusement, le moyen de détente est un orifice à section fixe, une telle section fixe étant notamment comprise entre 1.1 et 2 mm², de préférence 1.4 mm.

L'invention couvre également un circuit de fluide réfrigérant comprenant un compresseur, un échangeur intérieur, un organe de détente installé sur le circuit directement en aval de l'échangeur intérieur, un échangeur extérieur et un évaporateur, raccordés entre eux par au moins un moyen de transport de fluide, caractérisé en ce qu'il comprend un dispositif de détente incorporant l'une quelconque des caractéristiques évoquées ci-dessus. On comprend que le dispositif de détente est intercalé entre une sortie de l'échangeur extérieur et une entrée de l'évaporateur.

L'invention protège encore une utilisation du circuit présenté ci-dessus pour conditionner thermiquement un flux d'air intérieur envoyé dans un habitacle de véhicule, où ledit circuit est utilisé au moins :
- en un mode de refroidissement du flux d'air intérieur, la circulation du fluide réfrigérant dans l'organe de détente étant contournée alors qu'un abaissement de la pression du fluide réfrigérant est opéré par le moyen de détente du dispositif de détente,
- en un premier mode de chauffage du flux d'air intérieur, l'organe de détente abaissant la pression du fluide réfrigérant,
- en un deuxième mode de chauffage du flux d'air intérieur, dans lequel l'organe de détente abaisse la pression du fluide réfrigérant en dessous du seuil déterminé afin que le moyen de contournement s'ouvre,
- en un mode de déshumidification du flux d'air intérieur, au cours duquel le fluide réfrigérant traverse l'échangeur extérieur et où l'organe de détente abaisse la pression du fluide réfrigérant en dessous du seuil déterminé afin que le moyen de contournement s'ouvre,
- en un mode de dégivrage de l'échangeur extérieur au cours duquel la circulation du fluide réfrigérant dans l'organe de détente est contournée, la pression du fluide réfrigérant étant en dessous du seuil déterminé afin que le moyen de contournement s'ouvre.

Selon une première caractéristique de l'invention, la circulation du fluide réfrigérant dans l'évaporateur et le dispositif de détente est contournée par un premier ensemble de contournement quand le circuit est utilisé en premier mode de chauffage.

En d'autres termes, le dispositif de détente génère une détente du fluide réfrigérant en mode de refroidissement et n'en génère pas en deuxième mode de chauffage, en mode de déshumidification et en mode de dégivrage malgré le fait que le fluide réfrigérant le traverse.

Selon une deuxième caractéristique de l'invention, la circulation du fluide réfrigérant dans l'échangeur extérieur est contournée par un deuxième ensemble de contournement quand le circuit est utilisé en deuxième mode de chauffage.

Selon une autre caractéristique de l'invention, le fluide réfrigérant circule dans un même sens dans l'échangeur extérieur quand le circuit est utilisé en mode de refroidissement, en premier mode de chauffage, en mode de déshumidification, et en mode de dégivrage.

Un tout premier avantage selon l'invention réside dans la possibilité d'opérer un circuit de fluide réfrigérant en au moins trois modes, c'est-à-dire le mode de refroidissement, le mode de chauffage et le mode de déshumidification, tout en puisant l'énergie sur l'échangeur extérieur et sans limiter le débit du fluide réfrigérant dans le circuit quand celui-ci est opéré en mode de déshumidification.

Un autre avantage réside dans le compromis opéré par le circuit selon l'invention quand il est équipé du dispositif de détente car au moins les trois modes présentés ci-dessus fonctionnent avec un coefficient de performance élevé.

D'autres caractéristiques, détails et avantages de l'invention ressortiront plus clairement à la lecture de la description donnée ci-après à titre indicatif en relation avec des dessins dans lesquels :
- la figure 1 est une vue en coupe d'un dispositif de détente selon l'invention,
- la figure 2 est un graphe illustrant le comportement du dispositif de détente, notamment sa section de passage, au regard de la pression de fluide réfrigérant en amont du dispositif de détente,
- la figure 3 est une vue schématique d'un circuit selon l'invention,
- la figure 4 est une vue schématique du circuit de la figure 3 opéré en un mode de refroidissement,
- la figure 5 est une vue schématique du circuit de la figure 3 opéré en un premier mode de chauffage,
- la figure 6 est une vue schématique du circuit de la figure 3 opéré en un mode de déshumidification,
- la figure 7 est une vue schématique du circuit de la figure 3 opéré en un deuxième mode de chauffage,
- la figure 8 est une vue schématique du circuit de la figure 3 opéré en un mode de dégivrage.

Il faut noter que les figures exposent l'invention de manière détaillée pour mettre en oeuvre l'invention, lesdites figures pouvant bien entendu servir à mieux définir l'invention le cas échéant.

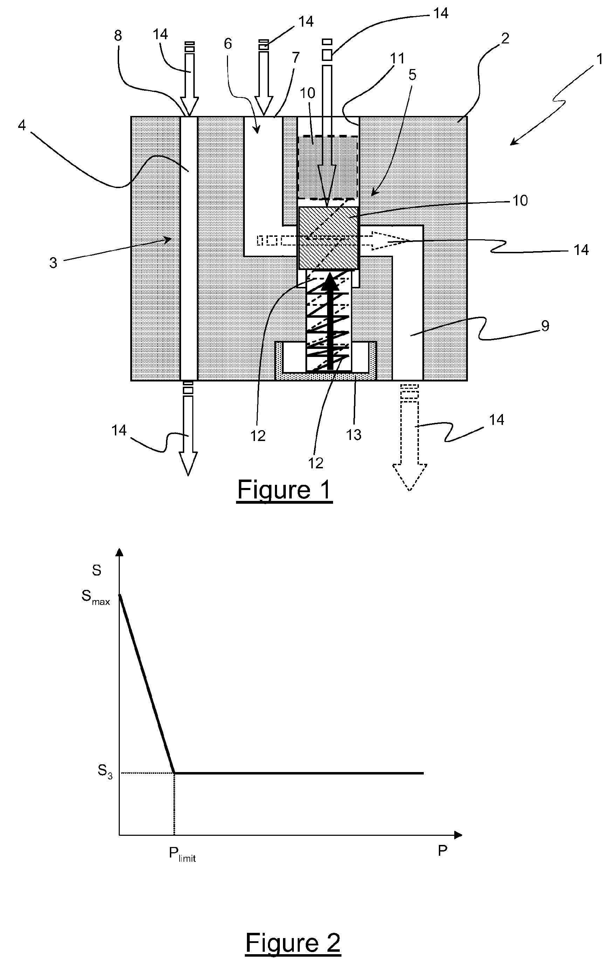

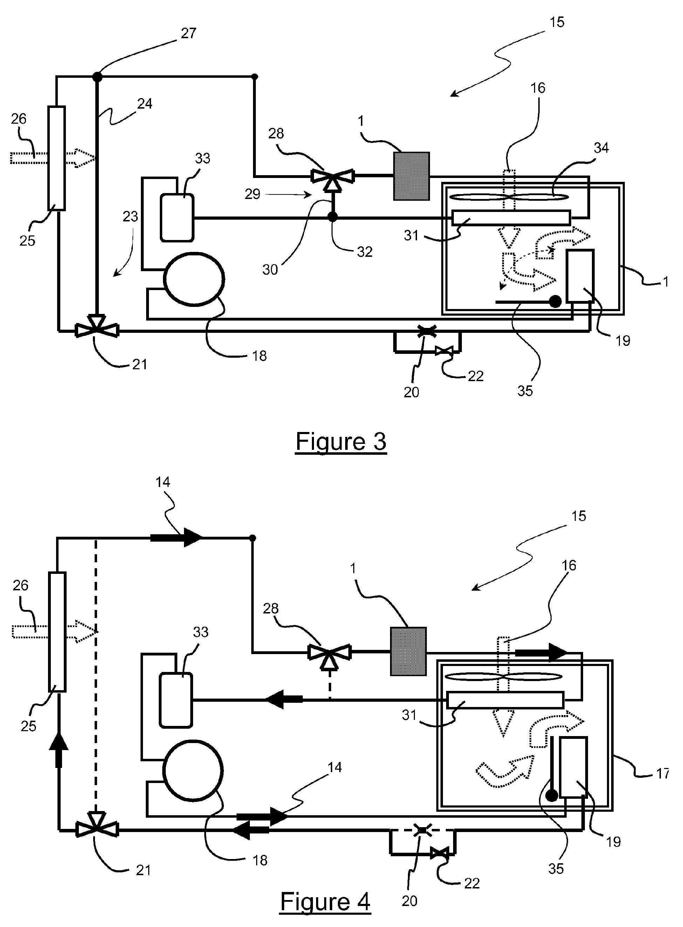

La figure 1 montre un dispositif de détente 1 selon l'invention. Ce dispositif de détente 1 est installé entre une sortie d'un échangeur extérieur et une entrée d'un évaporateur. La localisation de ce dispositif de détente vis-à-vis du circuit sera abordée plus en détails à la figure 3. On peut néanmoins préciser que ce dispositif de détente reçoit le fluide réfrigérant, le canalise et ou abaisse sa pression, avant de le délivrer au reste du circuit.

Ce dispositif de détente 1 comprend un corps 2 à travers lequel des canaux sont réalisés pour conduire le fluide réfrigérant 14. On comprend ainsi que le corps 2 est propre à être traversé par le fluide réfrigérant qui circule dans le circuit.

Ce corps 2 reçoit un moyen de détente 3 dont la fonction est d'abaisser la pression du fluide réfrigérant 14 quand le circuit est opéré en un mode de refroidissement. Selon un exemple de réalisation, le moyen de détente 3 prend la forme d'un orifice, autrement appelé tube, à section fixe 4. Le caractère fixe de la section évoquée ici signifie que la section de passage du fluide réfrigérant 14 est déterminée par les dimensions de l'orifice, ces dernières n'étant pas modulables. La section fixe en question est notamment comprise entre 1.1 et 2 mm². De manière avantageuse, cette section fixe est choisie égale à 1.54 mm², ce qui correspond à un orifice de section circulaire de diamètre égale à 1,4 mm.

Selon une autre variante non représentée, ce moyen de détente 3 prend la forme d'une vanne thermostatique, dont la section s'ajuste en fonction de la température du fluide réfrigérant en sortie de l'évaporateur.

Le dispositif de détente 1 selon l'invention comprend un moyen de contournement 5 du moyen de détente 3. La fonction de ce moyen de contournement 5 est d'autoriser une circulation de fluide réfrigérant 14 en parallèle du moyen de détente 3 sous certaines conditions.

Le moyen de contournement 5 est susceptible de s'ouvrir ou de se fermer en fonction de la pression du fluide réfrigérant immédiatement en amont du dispositif de détente, c'est-à-dire à son entrée. La particularité de l'invention repose dans le fait que le dispositif de détente augmente sa section de passage globale, correspondant à la section de passage du moyen de détente additionnée de la section de passage du moyen de contournement, quand la pression en amont du moyen de détente diminue et franchit un seuil. On comprend ainsi que le moyen de détente 5 est apte à s'ouvrir quand la pression du fluide réfrigérant 14 à l'entrée du dispositif de détente 1 est inférieure à un seuil déterminé Pₗᵢₘᵢₜ. De manière avantageuse, se seuil déterminé Pₗᵢₘᵢₜ est par exemple égal à 4 bars +/-0.6 bars.

On comprend de ceci que, lorsque la pression en amont immédiat du dispositif de détente 1 est inférieure à 4 bars, le moyen de contournement s'ouvre et autorise une circulation de fluide réfrigérant 14 en parallèle du moyen de détente 3. Corrélativement, le moyen de contournement est fermé quand cette pression dépasse 4 bars, c'est-à-dire le seuil déterminé Pₗᵢₘᵢₜ.

On notera tout particulièrement que le moyen de contournement 5 est responsable d'une perte de charge maximum de 1 bar +/-0.5 bars. Avantageusement, ce moyen de contournement 5 est agencé pour que sa perte de charge soit égale à 0.5 bars. Cette valeur est particulièrement avantageuse car elle garantit l'absence d'impact sur le cycle thermodynamique qui prend place dans le circuit, notamment en mode de déshumidification.

La structure du moyen de contournement 5 est la suivante. Celui-ci comprend un canal 6 dont une portion d'entrée 7 est à la même pression de fluide réfrigérant 14 qu'une entrée 8 du moyen de détente 3. Selon un exemple de réalisation, la portion d'entrée 7 et l'entrée 8 peuvent se rejoindre dans une même chambre d'admission (non représentée).

Le canal 6 comprend encore une portion de sortie 9 par laquelle le fluide réfrigérant 14 ayant traversé le moyen de contournement sort. Intercalé entre la portion d'entrée 7 et la portion de sortie 9, le moyen de contournement 5 comprend un élément d'obturation 10 qui contrôle la circulation de fluide réfrigérant 14 dans le canal 6.

Sur la figure 1, ce moyen d'obturation 10 est représenté en trait plein dans une position où il obture ou interdit toute circulation de fluide réfrigérant dans le moyen de contournement 5. Il est également représenté en trait pointillé qui symbolise le cas où le moyen de contournement 5 laisse passer le fluide réfrigérant 14.

L'élément d'obturation 10 est déplaçable, par exemple en translation, dans un fût 11 réalisé dans le corps 2. L'élément d'obturation prend par exemple la forme d'un piston ou d'un tiroir.

En dehors des forces de frottement de l'élément d'obturation 10 sur le corps 2, cet élément d'obturation 10 est soumis à deux forces, une première étant d'origine hydraulique alors qu'une deuxième est d'origine mécanique. On comprend ainsi que l'élément d'obturation est d'un côté exposé à la pression du fluide réfrigérant 14 présent dans le fût 11, ce dernier étant à la même pression que la portion d'entrée 7 ou l'entrée 8. La pression du fluide réfrigérant influence ainsi la position de l'élément d'obturation 10 par rapport au canal 6.

Cet élément d'obturation 10 subit une seconde force d'origine mécanique. Selon un exemple de réalisation, cette force est exercée par un moyen ressort 12 qui prend appui d'un côté sur l'élément d'obturation 10 et de l'autre sur un bouchon 13 solidarisé au corps 2. Ce moyen ressort est représenté en trait plein dans une position comprimé, la force généré par le fluide réfrigérant 14 étant supérieure à la force exercée par le moyen ressort 12. Ce dernier est également représenté en trait pointillé de manière détendue, sa force étant alors supérieure à la force générée par le fluide réfrigérant 14 contre l'élément d'obturation 10. La direction empruntée par la force générée par la pression est identique à la force générée par le moyen ressort 12. En revanche, le sens de ces forces est opposé de sorte à autoriser un déplacement de l'élément d'obturation.

On notera enfin que c'est la force d'origine mécanique, notamment le ressort 12, qui détermine le seuil de pression en dessous duquel le moyen de contournement 5 s'ouvre.

L'invention fonctionne particulièrement bien quand le canal 6 présente une section au minimum égale à 9 mm². On garantit ainsi que la perte de charge dans le moyen de contournement 6 est négligeable vue du cycle thermodynamique.

La figure 2 est un graphique qui illustre le comportement du dispositif de détente 1 selon l'invention. On a représenté en abscisse la pression P du fluide réfrigérant en amont du dispositif de contournement, notamment la pression qui règne dans le fût 11. En ordonnée est représentée la section d'ouverture globale S du dispositif de détente 1 selon l'invention.

En dessous d'une pression Pₗᵢₘᵢₜ, par exemple égale à 4 bars, et correspondant à la valeur seuil, la section globale S est supérieure à une section de passage S₃ de l'orifice fixe, par exemple. On constate que plus la pression P baisse, plus la section global S augmente jusqu'à atteindre un maximum Sₘₐₓ correspondant à une ouverture totale de l'élément d'obturation. On comprend que, selon cette variante, l'ouverture du moyen de contournement est proportionnelle à la pression en amont de ce dernier. L'invention n'est bien entendu pas limitée à ce cas d'espèce puisqu'il est prévu que l'élément d'obturation soit bi-stable afin de prendre exclusivement une position totalement ouverte ou totalement fermée en fonction du seuil Pₗᵢₘᵢₜ déterminé.

Quand la pression du fluide réfrigérant dépasse le seuil déterminé Pₗᵢₘᵢₜ, l'élément d'obturation ferme le moyen de contournement et le fluide réfrigérant s'écoule seulement par le moyen de détente 3.

La figure 3 illustre un circuit 1 selon l'invention dans lequel est incorporé le dispositif de détente 1 présenté en détails ci-dessus. On s'attachera ci-après à décrire dans un premier temps l'architecture de ce circuit quel que soit le mode de fonctionnement (figure 3), puis, dans un deuxième temps, on décrira le parcours emprunté, ou apte à être emprunté, par un fluide réfrigérant circulant dans le circuit pour chacun des modes de fonctionnement (figures 4 à 8).

Les termes « amont » et « aval » employés ci-dessous se réfèrent au sens de déplacement du fluide considéré dans le composant ou portion considérée.

Sur les figures 4 à 8, le circuit 1 comprend des portions, secteurs ou zones en trait plein symbolisant la circulation du fluide réfrigérant pendant le mode de fonctionnement considéré, les flèches symbolisant le sens de circulation. Les portions, secteurs ou zones du circuit 15 représentés en trait pointillé symbolise une absence de circulation du fluide réfrigérant.

Le circuit 15, autrement appelé boucle de climatisation ou circuit frigorigène, est une boucle fermée à l'intérieur de laquelle un fluide réfrigérant circule. Le fluide réfrigérant est du type d'un fluide sous-critique, tel que l'hydrofluorocarbone connu sous l'acronyme R134a ou un fluide frigorigène à faible nuisance sur l'effet de serre, c'est-à-dire qui soit en mesure d'offrir une solution durable pour les climatiseurs automobiles, connu sous la dénomination HFO1234yf. Il peut aussi être un fluide sur-critique, tel que du dioxyde de carbone, par exemple, connu sous l'appellation R744. Dans ce cas le condenseur est remplacé par un refroidisseur de gaz.

Un tel circuit sert à conditionner, c'est-à-dire ajuster la température et l'humidité, de l'air présent dans un habitacle d'un véhicule automobile. Ce conditionnement thermique est mis en oeuvre par l'envoi d'un flux d'air référencé 16 à l'intérieur de l'habitacle. Ce flux d'air intérieur 16 est traité thermiquement quand ce dernier traverse une installation de ventilation, chauffage et/ou climatisation 17, cette installation logeant certains composants du circuit 15 et au moins un volet 35 dont la fonction est de gérer la circulation d'air au travers d'un échangeur intérieur. Ce flux d'air est qualifié de flux d'air intérieur car ce flux est un vecteur du conditionnement thermique opéré dans l'habitacle du véhicule.

Ce flux d'air intérieur 16 est par exemple mis en mouvement par un ventilateur 34 solidarisé à l'installation de ventilation, chauffage et/ou climatisation 17.

Le circuit 15 de fluide réfrigérant comprend un compresseur 18, par exemple électrique, dont le mécanisme de compression est de type à spirale ou à pistons, entrainé par un moteur électrique intégré dans un boîtier du compresseur. Ce compresseur 18 a pour fonction de mettre en circulation le fluide réfrigérant tout en élevant sa pression et corrélativement sa température.

Une sortie du compresseur 18 est raccordée directement à une entrée d'un échangeur de chaleur, ci-après qualifié d'échangeur intérieur 19. Ce dernier est un échangeur de chaleur dont la fonction est de mettre en oeuvre un échange thermique entre le flux d'air intérieur 16 qui le traverse et le fluide réfrigérant qui circule dans l'échangeur intérieur 19. Un tel échangeur est monté dans l'installation de ventilation, de chauffage et/ou de climatisation 17.

Cet échangeur intérieur 19 est spécifiquement dédié à la fonction de chauffage de l'habitacle du véhicule mise en oeuvre dans le premier mode de chauffage, le deuxième mode de chauffage et dans le mode de déshumidification.

Une sortie de cet échangeur intérieur 19 est raccordée à une entrée d'un organe de détente 20, ce dernier présentant une sortie connectée à un dispositif de bifurcation 21. Un tel organe de détente 20 prend avantageusement la forme d'un orifice calibré dont la section de passage de fluide réfrigérant est fixe. De manière alternative, il peut également s'agir d'un détendeur thermostatique ou encore un détendeur à commande électrique ou électronique.

Immédiatement en parallèle de cet organe de détente 20, le circuit 15 comprend une vanne de contournement 22 dont une entrée est raccordée à une entrée de l'organe de détente 20, alors qu'une sortie est connectée à la sortie de l'organe de détente 20. Une telle vanne de contournement 22 prend par exemple la forme d'une vanne deux voies pilotée électriquement en fonction du mode de fonctionnement du circuit.

Le dispositif de bifurcation 21 fait partie d'un deuxième ensemble de contournement 23, ce dernier comprenant également une conduite 24 installée en parallèle, vue du fluide réfrigérant, d'un échangeur extérieur 25.

Cet échangeur extérieur 25 est installé généralement en face avant d'un véhicule. Il est chargé de réaliser un échange thermique entre le fluide réfrigérant qui circule en son sein et un flux d'air 26 extérieur à l'habitacle du véhicule porteur du circuit selon l'invention. Dans la description qui suit, cet échangeur sera appelé échangeur extérieur 25.

Le dispositif de bifurcation 21 comprend ainsi une entrée connectée directement à l'organe de détente 20, une première sortie en communication avec la conduite 24 et une deuxième sortie raccordée à une entrée de l'échangeur extérieur 25.

Cet échangeur extérieur 25 comprend une sortie de fluide réfrigérant qui est connectée en un premier point de raccordement 27, ce denier étant également connecté à la conduite 24 et au reste du circuit 15.

Immédiatement en aval de ce premier point de raccordement 27, est installé sur le circuit 15 un dispositif de séparation 28 du fluide réfrigérant. Ce dispositif de séparation 28 fait partie plus généralement d'un premier ensemble de contournement 29, ce dernier étant complété par la présence d'une canalisation 30 dont la fonction est de permettre au fluide réfrigérant de contourner le dispositif de détente 1 et un évaporateur 31 constitutif du circuit 15.

Le dispositif de séparation 28 comprend ainsi une entrée connectée au point de raccordement 27, une première sortie raccordée au dispositif de détente 1, et particulièrement à sa chambre d'admission, et une deuxième sortie mise en communication avec la canalisation 30. On rappellera que la chambre d'admission du dispositif de détente selon l'invention alimente simultanément le moyen de détente, le moyen de contournement et le fut dans lequel se déplace l'élément d'obturation.

Une chambre d'évacuation du dispositif de détente collecte le fluide réfrigérant en provenance du moyen de détente et/ou du moyen de contournement. Cette chambre d'évacuation est raccordée à une entrée de l'évaporateur 31, ce dernier étant un échangeur de chaleur entre le fluide réfrigérant et le flux d'air intérieur 16 envoyé dans l'habitacle du véhicule. On notera que cet évaporateur 31 est monté dans l'installation de ventilation, chauffage et/ou climatisation 17, en amont de l'échangeur intérieur 19 par rapport au sens de déplacement flux d'air intérieur 16.

Une sortie de cet évaporateur 31 est raccordée à un deuxième point de raccordement 32, ce dernier étant également raccordé à la canalisation 30 constitutive du premier ensemble de contournement 29.

Ce deuxième point de raccordement 32 est connectée à une entrée du compresseur 18 soit directement, soit par l'intermédiaire d'un dispositif de stockage 33 de fluide réfrigérant, dont la fonction est de stocker la masse non circulante de fluide réfrigérant en fonction des conditions de températures et en fonction du mode de fonctionnement choisi.

Après avoir décrit en détails la structure du circuit selon l'invention, on explique maintenant la circulation du fluide réfrigérant dans ce circuit quand celui-ci est en fonctionnement selon le mode choisi.

La figure 4 illustre la circulation du fluide réfrigérant dans le circuit 15 quand celui-ci est utilisé en mode de refroidissement du flux d'air intérieur 16.

Le fluide réfrigérant 14 est comprimé par le compresseur et circule au travers de l'échangeur intérieur 19. En mode de refroidissement, l'échange thermique entre le flux d'air intérieur 16 et le fluide réfrigérant chaud présent dans l'échangeur intérieur 19 est interdit par la présence du volet 35 de blocage du flux d'air. Ce dernier peut être placé immédiatement en amont ou en aval de l'échangeur intérieur 19.

Le fluide réfrigérant 14 contourne l'organe de détente 20 en passant par la vanne de contournement 22, sans subir d'abaissement de pression. Le dispositif de bifurcation 21 interdit la circulation de fluide réfrigérant dans la conduite 24 et, par conséquent, impose une circulation de fluide réfrigérant 14 au travers de l'échangeur extérieur 25. Le fluide réfrigérant est alors refroidit par échange thermique avec le flux d'air extérieur 26 et poursuit son chemin jusqu'au dispositif de séparation 28. Ce dernier bloque la circulation de fluide réfrigérant dans la canalisation 30 et autorise cette circulation en direction du dispositif de détente 1.

Lors de la mise en oeuvre de ce mode de fonctionnement, la pression du fluide réfrigérant 14 à l'entrée du dispositif de détente est supérieure à la valeur seuil Pₗᵢₘᵢₜ. Ainsi, le moyen de contournement est maintenu fermé et le fluide réfrigérant 14 s'écoule au travers du moyen de détente, ce dernier abaissant sa pression.

Le fluide réfrigérant ainsi détendu entre dans l'évaporateur où il échange avec le flux d'air intérieur 16, en vue de refroidir ce dernier. Le fluide réfrigérant termine son parcours en traversant le dispositif de stockage 33 de fluide réfrigérant pour enfin retourner au compresseur 18, avant d'effectuer une nouvelle boucle.

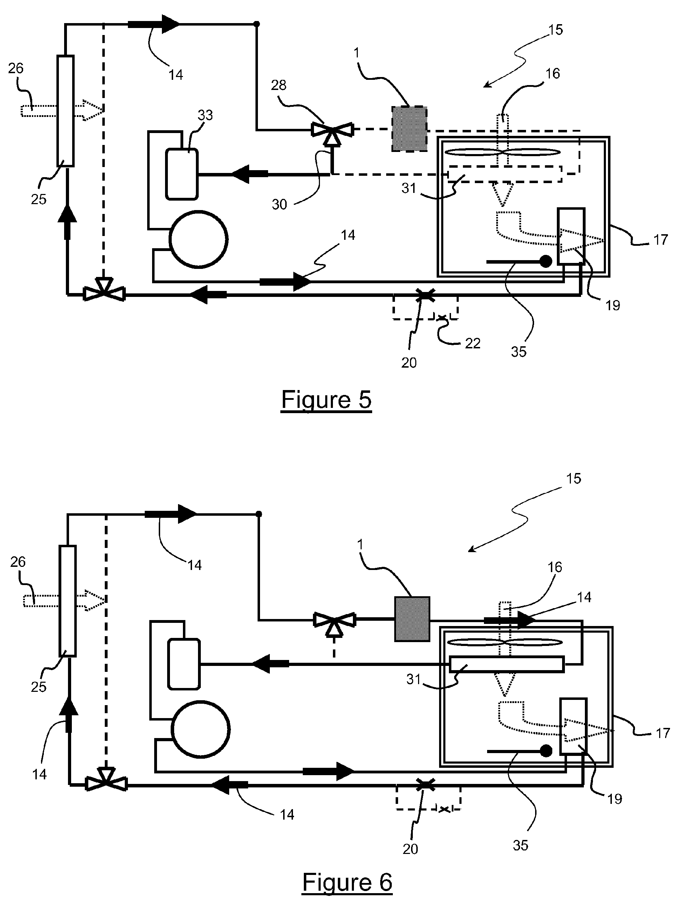

La figure 5 montre l'utilisation du circuit 15 en un premier mode de chauffage, où l'énergie est puisée dans le flux d'air extérieur 26 via l'échangeur extérieur 25.

On se reportera à la description des figures 3 et 4 pour connaître la structure des composants. On notera que le fluide réfrigérant 14 circule dans le même sens au coeur du circuit 15 que le sens de circulation pour le mode de refroidissement présenté à la figure 4. La description ci-dessous s'attache aux différences comparées à cette dernière.

Une première différence réside dans la position du volet 35 à l'intérieur de l'installation de ventilation, chauffage et/ou climatisation 17. En effet, celui-ci est placé dans une position où il autorise l'échange thermique entre le flux d'air intérieur 16 et l'échangeur intérieur 19. A titre d'exemple, le volet 35 libère le passage sur une surface frontale de l'échangeur intérieur 19.

Une deuxième différence réside dans l'organe de détente 20 et la vanne de contournement 22. Cette dernière est fermée, de sorte que le fluide réfrigérant 14 passe nécessairement au travers de l'organe de détente 20. Le fluide réfrigérant 14 y est détendu, si bien que l'échangeur extérieur 25 se comporte alors comme un évaporateur, le fluide réfrigérant refroidissant le flux d'air extérieur.

Le dispositif de séparation 28 est placé dans une position où il interdit la circulation de fluide réfrigérant en direction du dispositif de détente 1 et autorise cette circulation en direction de la canalisation 30. On comprend ainsi que ce dispositif de séparation 28 et cette conduite 30 forme le premier ensemble de contournement 29, le fluide réfrigérant 14 contournant alors la portion du circuit 15 qui comprend le dispositif de détente 1 et l'évaporateur 31.

La figure 6 illustre le mode de déshumidification au cours duquel il convient d'assécher le flux d'air intérieur au moyen de l'évaporateur tout en le chauffant à l'aide de l'échangeur intérieur 19.

On se reportera à la figure 5 pour la description de la fonction chauffage. La description ci-dessous s'attache aux différences et on se reportera à la description des figures 3 à 5 pour connaître le moyen de mettre en oeuvre les composants identiques.

Dans cette situation, le dispositif de détente 1 reçoit le fluide réfrigérant 14 à une pression inférieure à la valeur seuil déterminé. L'élément d'obturation est alors poussé par le ressort et le moyen de contournement est ainsi libéré. Le fluide réfrigérant 14 contourne alors le moyen de détente installé dans le dispositif de détente 1 et traverse ce dernier sans subir d'abaissement de pression significatif au regard du cycle thermodynamique. Pour ce faire, la perte de charge du dispositif de détente 1 quand le moyen de contournement est ouvert est égale à 1 bar +/- 0,5 bar. La valeur de 0,5 bar sera préférée.

L'évaporateur 31 refroidit alors le flux d'air intérieur 16 et assèche ce dernier, ce qui permet de remplir la fonction de déshumidification.

Le dispositif de détente 1 est particulièrement avantageux dans ce mode de fonctionnement. En effet, comme il est transparent du point de vue thermodynamique, il alors possible de détendre le fluide réfrigérant au niveau de l'organe de détente 20 à un niveau de température avoisinant 0°C, ce qui permet de capter un maximum d'énergie au niveau de l'échangeur extérieur 25 sans risquer de le givrer ou de givrer l'évaporateur 31. Le débit du fluide réfrigérant 14 n'est par ailleurs pas limité par le dispositif de détente 1, ce qui contribue à améliorer le coefficient de performance du cycle thermodynamique du circuit quand il est utilisé en ce mode de déshumidification.

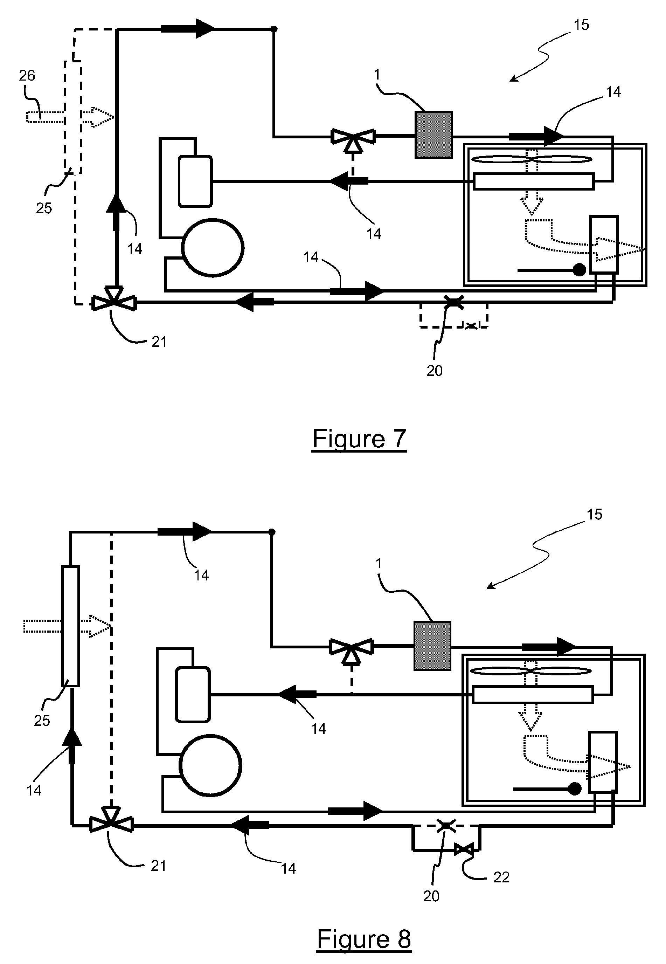

La figure 7 montre le circuit selon l'invention dans un deuxième mode de chauffage, autrement appelé mode récupératif ou mode de récupération. Un tel mode est par exemple utilisé quand la température du flux d'air extérieur 26 rend inopérant l'utilisation de l'échangeur extérieur 25. Le cycle thermodynamique du fluide réfrigérant est alors opéré en utilisant exclusivement l'évaporateur 31 et l'échangeur intérieur 19 traversés par le flux d'air intérieur 16 issu ou provenant de l'habitacle du véhicule. Le mode chauffage est ainsi réalisé par la compression d'un fluide réfrigérant ayant au préalable puisé les calories du flux d'air intérieur 16. Le coefficient de performance de la boucle de climatisation s'en trouve d'autant plus améliorée. En outre, dans l'hypothèse d'une intégration d'un radiateur électrique de chauffage (non représenté) dans l'installation de ventilation, chauffage et/ou climatisation, le radiateur électrique de chauffage est dans un état inactif de fonctionnement, ce qui limite la consommation d'énergie.

Les différences par rapport à la figure 6 sont les suivantes. Le dispositif de bifurcation 21 est agencé pour autoriser une circulation de fluide réfrigérant 14 dans la conduite 24 et interdire toute circulation du fluide réfrigérant dans l'échangeur extérieur 25. Ce faisant, le fluide réfrigérant 14 contourne l'échangeur extérieur 25.

Dans ce mode de fonctionnement, il est important que le fluide réfrigérant présente un débit au sein de la boucle qui ne passe pas en dessous d'une valeur déterminée. Par ailleurs, l'invention permet de faire fonctionner l'évaporateur 31 sous un différentiel de pressions le plus important possible.

Le fluide réfrigérant 14 détendu par le premier organe de détente 20 entre dans le dispositif de détente 1 à une pression qui est inférieure au seuil de pression déterminé Pₗᵢₘᵢₜ. Le fluide réfrigérant contourne alors le moyen de détente du dispositif de détente 1, ce qui permet de ne pas limiter le débit de fluide réfrigérant.

La figure 8 illustre le mode de fonctionnement de dégivrage de l'échangeur extérieur 25. Il s'agit d'une situation où le mode de chauffage a été opéré dans des conditions qui génèrent du givre sur l'échangeur extérieur. Le mode de dégivrage est alors activé pendant un temps déterminé pour dégivrer l'échangeur extérieur. On comprend donc que le mode de dégivrage est activé immédiatement après le premier mode de chauffage, en fonction du niveau de colmatage par le givre de l'échangeur extérieur 25.

Dans ce mode également, il est intéressant de ne pas limiter inutilement le débit de fluide réfrigérant 14. La vanne de contournement 22 est ouverte de sorte à laisser passer le fluide réfrigérant chaud sans abaisser sa pression. Le dispositif de bifurcation 21 autorise le passage du fluide réfrigérant 14 vers l'échangeur extérieur.

Comme le fluide réfrigérant 14 est chaud, sa traversée de l'échangeur extérieur provoque une fonte accélérée du givre présent du l'échangeur extérieur 25. Bien que le fluide réfrigérant ne soit pas détendu, on constate que la pression du fluide réfrigérant à l'entrée du dispositif de détente 1, c'est-à-dire en amont du moyen de contournement du moyen de détente, est inférieure à la valeur seuil déterminée Pₗᵢₘᵢₜ. Le moyen de contournement s'ouvre alors pour autoriser un débit maximum du fluide réfrigérant dans le circuit 15. On améliore ainsi les performances du cycle thermodynamique qui se traduisent par une réduction du temps nécessaire pour réaliser le dégivrage de l'échangeur extérieur 25. Ceci est intéressant car cela permet de mettre en fonctionnement à nouveau le premier mode de chauffage plus rapidement, ce qui garantit l'obtention des conditions thermiques de l'habitacle telles que demandées par l'utilisateur du véhicule.

La description ci-dessus fait état de dispositif de bifurcation ou de dispositif de séparation apte à gérer la circulation du fluide réfrigérant dans l'un ou l'autre des ensembles de contournement 23 ou 29. Ces dispositifs prennent la forme d'une vanne trois voies pilotée électriquement, mais l'invention couvre également l'emploi de deux vannes deux voies distinctes.

La description ci-dessus emploi les termes « raccordé », « connecté », « en communication » et « directement » pour qualifier la position d'un composant par rapport à un autre. Ces termes doivent être compris en ce sens qu'un premier composant considéré est adjacent à une deuxième composant considéré, ou éventuellement relié l'un à l'autre exclusivement par un moyen de transport de fluide réfrigérant qui prend, par exemple, la forme d'un conduit ou d'un tube, notamment flexible ou rigide. Autrement dit, le premier composant considéré est relié au deuxième composant considéré par un moyen inactif au regard du cycle thermodynamique qui s'opère dans le circuit.

## Revendications

1. Dispositif de détente (1) pour circuit (15) de fluide réfrigérant installé sur un véhicule, comprenant un corps (2) propre à être traversé par un fluide réfrigérant (14), ledit corps (2) logeant un moyen de détente (3) propre à abaisser la pression du fluide réfrigérant (14) et un moyen de contournement (5) du moyen de détente (3), **caractérisé en ce que** ledit moyen de contournement (5) du moyen de détente (3) est apte à s'ouvrir quand une pression du fluide réfrigérant (14) en amont du moyen de contournement (5) est inférieure à un seuil déterminé (Pₗᵢₘᵢₜ).

2. Dispositif selon la revendication 1, dans lequel le moyen de contournement (5) est fermé quand la pression du fluide réfrigérant (14) en amont du moyen de contournement est supérieure audit seuil déterminé (Pₗᵢₘᵢₜ).

3. Dispositif selon l'une quelconque des revendications précédentes, dans lequel le moyen de contournement (5) est apte à générer une perte de charge maximum de 1 bar +/- 0,5 bar.

4. Dispositif selon l'une quelconque des revendications précédentes, dans lequel le moyen de contournement (5) comprend un canal (6) dont la circulation du fluide réfrigérant (14) est placée sous la dépendance d'un élément d'obturation (10), ledit élément d'obturation (10) étant d'une part exposé à la pression du fluide réfrigérant (14) en amont dudit élément d'obturation (10) et d'autre part soumis à un effort mécanique.

5. Dispositif selon la revendication 4, dans lequel un moyen ressort (12) exerce l'effort mécanique selon un sens opposé à un sens d'une force générée sur l'élément d'obturation (10) par la pression du fluide réfrigérant (14) en amont de l'élément d'obturation (10).

6. Dispositif selon la revendication 4 ou 5, dans lequel le canal (6) présente une section au minimum égale à 9 mm².

7. Dispositif selon l'une quelconque des revendications précédentes, dans lequel le moyen de détente (3) est un orifice à section fixe.

8. Dispositif selon la revendication 7, dans lequel la section fixe du moyen de détente (3) est comprise entre 1.1 et 2 mm².

9. Circuit (15) de fluide réfrigérant comprenant un compresseur (18), un échangeur intérieur (19), un organe de détente (20) installé sur le circuit (15) directement en aval de l'échangeur intérieur (19), un échangeur extérieur (25) et un évaporateur (31), **caractérisé en ce qu'**il comprend un dispositif de détente (1) selon l'une quelconque des revendications précédentes installé directement en amont de l'évaporateur (31).

10. Utilisation d'un circuit (15) selon la revendication 9 pour conditionner thermiquement un flux d'air intérieur (16) envoyé dans un habitacle de véhicule, où ledit circuit (15) est utilisé au moins :
- en un mode de refroidissement du flux d'air intérieur (16), la circulation du fluide réfrigérant (14) dans l'organe de détente (20) étant contournée alors qu'un abaissement de la pression du fluide réfrigérant (14) est opéré par le moyen de détente (3) du dispositif de détente (1),
- en un premier mode de chauffage du flux d'air intérieur (16), l'organe de détente (20) abaissant la pression du fluide réfrigérant (14),
- en un deuxième mode de chauffage du flux d'air intérieur (16), dans lequel l'organe de détente (02) abaisse la pression du fluide réfrigérant (14) en dessous du seuil déterminé (Pₗᵢₘᵢₜ) afin que le moyen de contournement (5) s'ouvre,
- en un mode de déshumidification du flux d'air intérieur (16), au cours duquel le fluide réfrigérant (14) traverse l'échangeur extérieur (25), et où l'organe de détente (20) abaisse la pression du fluide réfrigérant en dessous du seuil déterminé (Pₗᵢₘᵢₜ) afin que le moyen de contournement (5) s'ouvre,
- en un mode de dégivrage de l'échangeur extérieur (25) au cours duquel la circulation du fluide réfrigérant (14) dans l'organe de détente (20) est contournée, la pression du fluide réfrigérant étant en dessous du seuil déterminé (Pₗᵢₘᵢₜ) afin que le moyen de contournement (5) s'ouvre.

11. Utilisation selon la revendication 10, dans laquelle la circulation du fluide réfrigérant (14) dans l'évaporateur (31) et le dispositif de détente (1) est contournée par un premier ensemble de contournement (29) quand le circuit (15) est utilisé en premier mode de chauffage.

12. Utilisation selon l'une quelconque des revendications 10 ou 11, dans laquelle la circulation du fluide réfrigérant (14) dans l'échangeur extérieur (25) est contournée par un deuxième ensemble de contournement (23) quand le circuit (15) est utilisé en deuxième mode de chauffage.

13. Utilisation selon l'une quelconque des revendications 10 ou 12, dans laquelle le fluide réfrigérant (14) circule dans un même sens dans l'échangeur extérieur (25) quand le circuit (15) est utilisé en mode de refroidissement, en premier mode de chauffage, en mode de déshumidification, et en mode de dégivrage.

## Patentansprüche

1. Druckentlastungsvorrichtung (1) für einen Kühlmittelkreislauf (15), der an einem Fahrzeug angebracht ist, umfassend einen Körper (2), der geeignet ist, von einem Kühlmittel (14) durchströmt zu werden, wobei der Körper (2) ein Druckentlastungsmittel (3), das geeignet ist, den Druck des Kühlmittels (14) zu senken, und ein Umgehungsmittel (5) des Druckentlastungsmittels (3) aufnimmt, **dadurch gekennzeichnet, dass** das Umgehungsmittel (5) des Druckentlastungsmittels (3) geeignet ist, sich zu öffnen, wenn ein Druck des Kühlmittels (14) vorgelagert vor dem Umgehungsmittel (5) niedriger als ein bestimmter Schwellenwert (Pₗᵢₘᵢₜ) ist.

2. Vorrichtung nach Anspruch 1, wobei das Umgehungsmittel (5) geschlossen ist, wenn der Druck des Kühlmittels (14) vorgelagert vor dem Umgehungsmittel höher als ein bestimmter Schwellenwert (Pₗᵢₘᵢₜ) ist.

3. Vorrichtung nach einem der vorhergehenden Ansprüche, wobei das Umgehungsmittel (5) geeignet ist, einen maximalen Druckverlust von 1 bar +/-0,5 bar zu erzeugen.

4. Vorrichtung nach einem der vorhergehenden Ansprüche, wobei das Umgehungsmittel (5) einen Kanal (6) aufweist, dessen Zirkulation des Kühlmittels (14) der Abhängigkeit eines Verschlusselements (10) unterworfen ist, wobei das Verschlusselement (10) einerseits dem Druck des Kühlmittels (14) vorgelagert vor dem Verschlusselement (10) ausgesetzt ist, und andererseits einer mechanischen Belastung unterworfen ist.

5. Vorrichtung nach Anspruch 4, wobei ein Federmittel (12) die mechanische Belastung in eine Richtung ausübt, die einer Richtung einer Kraft entgegengesetzt ist, die auf das Verschlusselement (10) durch den Druck des Kühlmittels (14) vorgelagert vor dem Verschlusselement (10) erzeugt wird.

6. Vorrichtung nach Anspruch 4 oder 5, wobei der Kanal (6) einen Querschnitt aufweist, der mindestens gleich 9 mm² ist.

7. Vorrichtung nach einem der vorhergehenden Ansprüche, wobei das Druckentlastungsmittel (3) eine Öffnung mit festem Querschnitt ist.

8. Vorrichtung nach Anspruch 7, wobei der feste Querschnitt des Druckentlastungsmittels (3) zwischen 1,1 und 2 mm² beträgt.

9. Kühlmittelkreislauf (15), umfassend einen Kompressor (18), einen inneren Austauscher (19), ein Druckentlastungsorgan (20), das an dem Kreislauf (15) direkt nachgelagert nach dem inneren Austauscher (19) angebracht ist, einen äußeren Austauscher (25) und einen Verdampfer (31), **dadurch gekennzeichnet, dass** er eine Druckentlastungsvorrichtung (1) nach einem der vorhergehenden Ansprüche aufweist, die direkt vorgelagert vor dem Verdampfer (31) angebracht ist.

10. Verwenden eines Kreislaufs (15) nach Anspruch 9, um einen Innenluftstrom (16) thermisch zu konditionieren, der in einen Fahrgastraum eines Kraftfahrzeugs eingeleitet wird, wobei der Kreislauf (15) mindestens folgendermaßen verwendet wird:
- in einem Kühlmodus des Innenluftstroms (16), wobei die Zirkulation des Kühlmittels (14) in dem Druckentlastungsorgan (20) umgangen wird, während ein Absenken des Drucks des Kühlmittels (14) durch das Druckentlastungsmittel (3) der Druckentlastungsvorrichtung (1) betrieben wird,
- in einem ersten Heizmodus des Innenluftstroms (16), wobei das Druckentlastungsorgan (20) den Druck des Kühlmittels (14) absenkt,
- in einem zweiten Heizmodus des Innenluftstroms (16), wobei das Druckentlastungsorgan (02) den Druck des Kühlmittels (14) unter den bestimmten Schwellenwert (Pₗᵢₘᵢₜ) absenkt, damit sich das Umgehungsmittel (5) öffnet,
- in einem Entfeuchtungsmodus des Innenluftstroms (16), während dem das Kühlmittel (14) den äußeren Austauscher (25) durchströmt und wobei das Druckentlastungsorgan (20) den Druck des Kühlmittels unter den bestimmten Schwellenwert (Pₗᵢₘᵢₜ) absenkt, damit sich das Umgehungsmittel (5) öffnet,
- in einem Entfrostungsmodus des äußeren Austauschers (25), während dem die Zirkulation des Kühlmittels (14) in dem Druckentlastungsorgan (20) umgangen wird, wobei der Druck des Kühlmittels unter dem bestimmten Schwellenwert (Pₗᵢₘᵢₜ) liegt, damit sich das Umgehungsmittel (5) öffnet.

11. Verwendung nach Anspruch 10, wobei die Zirkulation des Kühlmittels (14) in dem Verdampfer (31) und die Druckentlastungsvorrichtung (1) durch eine erste Umgehungsanordnung (29) umgangen werden, wenn der Kreislauf (15) in dem ersten Heizmodus verwendet wird.

12. Verwendung nach einem der Ansprüche 10 oder 11, wobei die Zirkulation des Kühlmittels (14) in dem äußeren Austauscher (25) durch eine zweite Umgehungsanordnung (23) umgangen werden, wenn der Kreislauf (15) in dem zweiten Heizmodus verwendet wird.

13. Verwendung nach einem der Ansprüche 10 oder 12, wobei das Kühlmittel (14) in einer gleichen Richtung in dem äußeren Austauscher (25) zirkuliert, wenn der Kreislauf (15) in einem Kühlmodus, in einem ersten Heizmodus, in einem Entfeuchtungsmodus und in einem Entfrostungsmodus verwendet wird.

## Claims

1. Expansion device (1) for a cooling fluid circuit (15) which is installed in a vehicle, comprising a member (2) through which a cooling fluid (14) can flow, the member (2) accommodating an expansion means (3) which is capable of reducing the pressure of the cooling fluid (14) and a means (5) for bypassing the expansion means (3), **characterized in that** said means (5) for bypassing the expansion means (3) is capable of opening when a pressure of the cooling fluid (14) upstream of the bypassing means (5) is less than a predetermined threshold (Pₗᵢₘᵢₜ).

2. Device according to Claim 1, wherein the bypassing means (5) is closed when the pressure of the cooling fluid (14) upstream of the bypassing means is greater than the predetermined threshold (Pₗᵢₘᵢₜ).

3. Device according to either of the preceding claims, wherein the bypassing means (5) is capable of generating a maximum load loss of 1 bar ± 0.5 bar.

4. Device according to one of the preceding claims, wherein the bypassing means (5) comprises a channel (6), the cooling fluid circulation (14) of which is placed under the dependency of a blocking element (10), the blocking element (10), on the one hand, being exposed to the pressure of the cooling fluid (14) upstream of the blocking element (10) and, on the other hand, subjected to a mechanical force.

5. Device according to Claim 4, wherein a spring means (12) applies the mechanical force in a direction counter to a direction of a force generated on the blocking element (10) by the pressure of the cooling fluid (14) upstream of the blocking element (10).

6. Device according to Claim 4 or claim 5, wherein the channel (6) has a cross-section which is at least equal to 9 mm².

7. Device according to one of the preceding claims, wherein the expansion means (3) is a hole having a fixed cross-section.

8. Device according to Claim 7, wherein the fixed cross-section of the expansion means (3) is between 1.1 and 2 mm².

9. Cooling fluid circuit (15) which comprises a compressor (18), an internal exchanger (19), a expansion member (20) which is installed on the circuit (15) directly downstream of the internal exchanger (19), an external exchanger (25) and an evaporator (31), **characterized in that** it comprises a expansion device (1) according to one of the preceding claims installed directly upstream of the evaporator (31).

10. Use of a circuit (15) according to Claim 9 for thermally conditioning a flow of internal air (16) conveyed into a passenger space of a vehicle, where the circuit (15) is used at least:
- in a cooling mode of the flow of internal air (16), the circulation of the cooling fluid (14) in the expansion member (20) being bypassed when a reduction of the pressure of the cooling fluid (14) is carried out by the expansion means (3) of the expansion device (1),
- in a first heating mode of the flow of internal air (16), the expansion member (20) reducing the pressure of the cooling fluid (14),
- in a second heating mode of the flow of internal air (16), in which the expansion member (02) reduces the pressure of the cooling fluid (14) below the predetermined threshold (Pₗᵢₘᵢₜ) so that the bypassing means (5) opens,
- in a dehumidification mode of the flow of internal air (16), during which the cooling fluid (14) passes through the external exchanger (25) and in which the expansion member (20) reduces the pressure of the cooling fluid below the predetermined threshold (Pₗᵢₘᵢₜ) so that the bypassing means (5) opens,
- in a defrosting mode of the external exchanger (25) during which the circulation of the cooling fluid (14) in the expansion member (20) is bypassed, the pressure of the cooling fluid being below the predetermined threshold (Pₗᵢₘᵢₜ) so that the bypassing means (5) opens.

11. Use according to Claim 10, wherein the circulation of the cooling fluid (14) in the evaporator (31) and the expansion device (1) is bypassed by a first bypassing assembly (29) when the circuit (15) is used in the first heating mode.

12. Use according to either of Claims 10 and 11, wherein the circulation of the cooling fluid (14) in the external exchanger (25) is bypassed by a second bypassing assembly (23) when the circuit (15) is used in a second heating mode.

13. Use according to either of Claims 10 and 12, wherein the cooling fluid (14) flows in the same direction in the external exchanger (25) when the circuit (15) is used in cooling mode, in a first heating mode, in dehumidification mode and in defrosting mode.
